# Europäisches Patentamt
## European Patent Office
## Office européen des brevets

(19)

(11) Publication number: **0 082 162**
**B1**

(12) **EUROPEAN PATENT SPECIFICATION**

(45) Date of publication of patent specification: **28.11.84**

(21) Application number: **82901864.7**

(22) Date of filing: **03.06.82**

(86) International application number:
**PCT/SE82/00196**

(87) International publication number:
**WO 82/04411 23.12.82 Gazette 82/30**

(51) Int. Cl.³: **B 21 D 53/78,** B 23 P 15/02,
B 64 C 11/26

(54) **A PROPELLER BLADE.**

(30) Priority: **19.06.81 US 275266**

(43) Date of publication of application:
**29.06.83 Bulletin 83/26**

(45) Publication of the grant of the patent:
**28.11.84 Bulletin 84/48**

(84) Designated Contracting States:
**DE FR GB SE**

(56) References cited:
**US-A-2 328 348**
**US-A-2 450 440**

(73) Proprietor: **KOLECKI, Jerzy**
**Osbyringen 48**
**S-163 05 Stockholm (SE)**

(72) Inventor: **KOLECKI, Jerzy**
**Osbyringen 48**
**S-163 05 Stockholm (SE)**

(74) Representative: **Omming, Allan**
**A. OMMING & CO. AB Sveavägen 28-30**
**S-111 34 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to a propeller blade.

It is well known that for each engine used to drive, for example, a light aircraft, a hydrocopter or the like the engine speed and the engine power constitute those parameters which determine the design of the propeller blade. A normal propeller blade is twisted so that its pitch is constant at any given transverse section, which means that a propeller becomes very expensive unless it can be manufactured in great numbers.

Consequently, a prime object of the invention is to provide a propeller blade which is particularly cheap to manufacture and which can be readily obtained in practically any desired constant pitch within a very wide range.

Such a propeller blade can be produced cheaply and enables propellers for light aircraft, wind-power plants, industrial fans etc. to be manufactured at relatively low costs.

This object is realized with the propeller blade set forth in the following claims.

US—A—2 450 440 discloses the manufacture of propellers incorporating an extension of the trailing edge which permits the blade width and pitch distribution to be widely varied for one basic design; these, however, vary in section and do not have a trailing edge extension whose upper surface is tangential to that of the nominal trailing edge.

The invention will now be described in more detail with reference to the accompanying drawings, in which

Figure 1 is a sectional view of a blade-profile blank for producing a propeller blade according to the invention, taken at right angles to the longitudinal direction of the blank,

Figure 2 is a perspective view of a blade profile for producing a propeller blade according to the invention, shown in larger scale than in Figure 1,

Figure 3 is a sectional view of a conventional propeller blade and of a corresponding propeller blade according to the invention,

Figure 4 illustrates part of a two-bladed propeller according to the invention,

Figure 5 is an axial sectional view of the propeller hub of the propeller illustrated in Figure 4, and

Figure 6 illustrates a hub for a three-bladed propeller, seen in the direction of the axis of rotation.

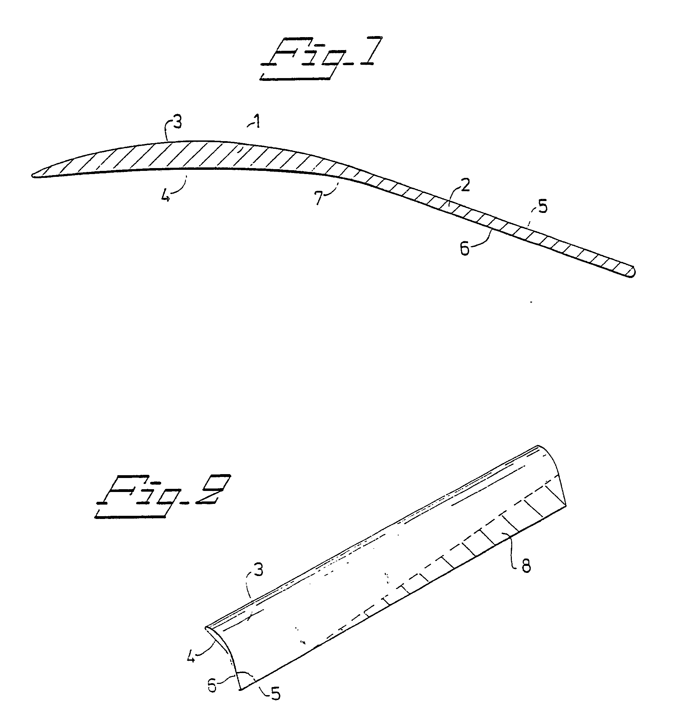

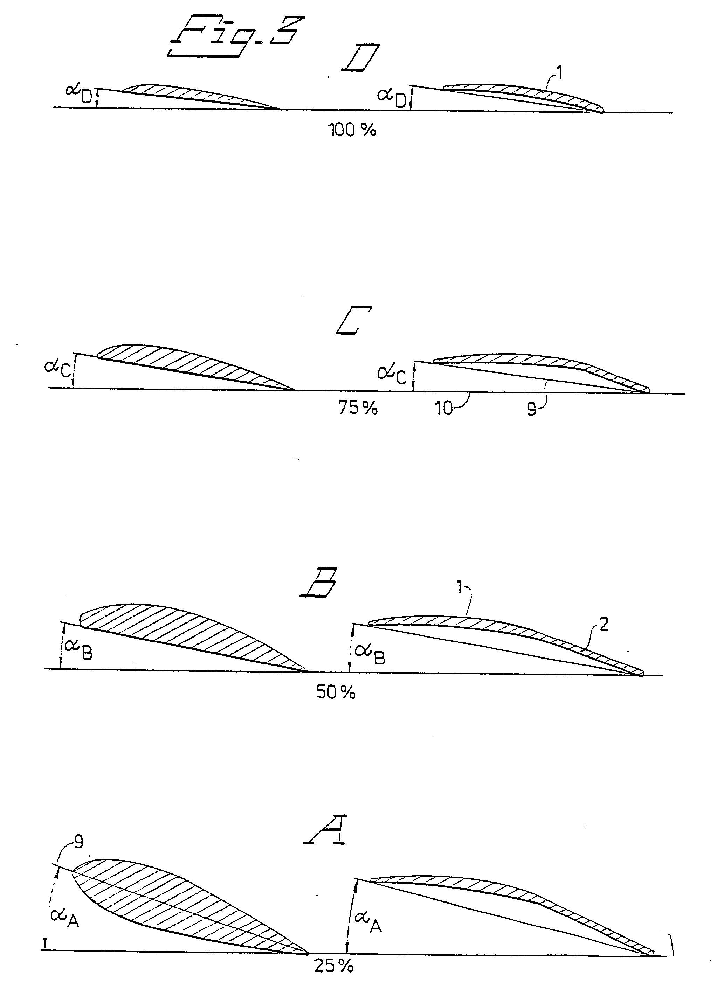

Figure 1 is a sectional view of a blade-profile blank for producing a popeller blade according to the invention in approximately double scale. The blade profile illustrated in smaller scale in Figure 2 comprises, for example, a hardened aluminium alloy which has been drawn to produce straight profiles of uniform thickness and breadth and a cross-sectional shape such as that shown by way of example in Figure 1.

The profile comprises a first, streamlined part 1 which along one imaginary edge merges with a second part 2 of constant thickness and width. The second part 2, which by suitable working is to provide the desired pitch angles along the blade, is made as thin as possible, to facilitate removal of material and to make it as light as possible. The thickness of the second part 2 of the profile illustrated in Figure 1 may be 1.5 mm. The first part 1 has a maximum thickness of 4 mm and a width of 50 mm. In the illustrated embodiment, the upper surface 3 is defined by a circular arc whose centre lies in a plane passing through the centre of the first part 1, while the lower surface 4 of said first part 1 is also defined by a circular arc whose centre lies in said plane. As will be understood, however, the surfaces 3 and 4 can be formed in any suitable manner whatsoever. The second blade part 2 has two planar, mutually parallel, or at least substantially parallel, surfaces 5 and 6, of which the surface 5 merges substantially tangentially with the surface 3, to provide the desired streamline properties of the blade. The surface 6 merges with the surface 4 through a smooth curve 7. In the illustrated embodiment, the part 2 of the profile has a width of about 45 mm. The angle between the second part 2 of the illustrated profile and the lower surface 4 is about 20°, but can be varied according to the rotational speeds for which the finished propeller is intended.

In Figure 2, the part 8 shown in dash lines illustrates the area to be removed from the second part 2 in order to obtain a desired pitch on a propeller.

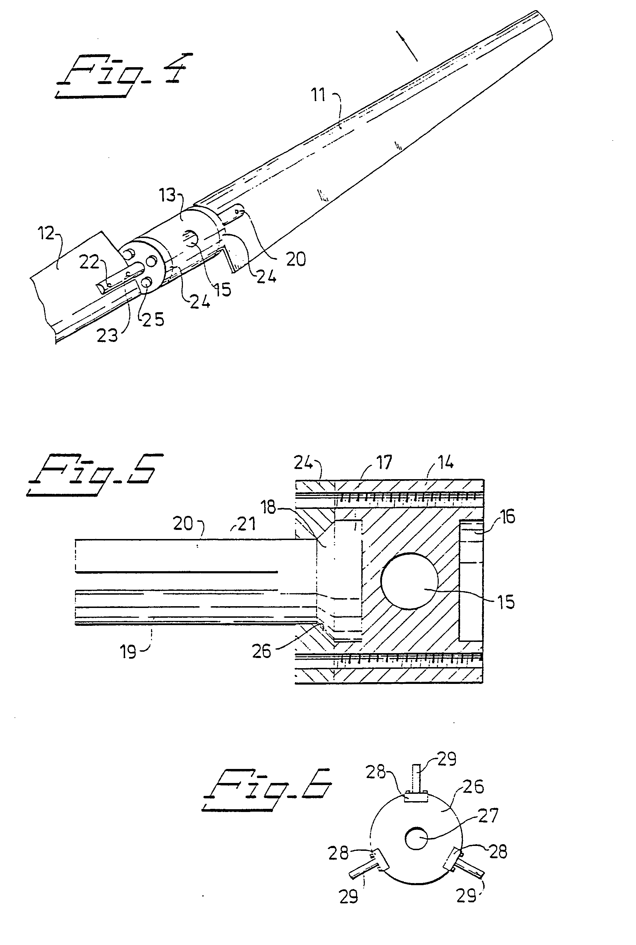

On the left of Figure 3 there are shown four sections of a conventional twisted propeller blade, said sections being taken from the blade tip at a distance of 100% of the blade length from the hub (section D), at a distance of 75% of the blade length from the hub (section C), at the centre of the blade, 50% of the blade length (section B), and at a distance of 25% of the blade length from the hub (section A). Shown to the right of Figure 3 are corresponding blade sections A, B, C and D of a blade profile according to the invention, said second blade part 2 being worked by removing material from within, for example, the region 8 shown in Figure 2. In order to obtain a constant pitch, the angle of attack $\alpha$ will, as is known, vary along the whole of the blade length and increase towards the hub, because the speed of rotation of the blade is greatest at the blade tip, i.e. at section D.

The angle $\alpha$ is measured between a line drawn between the longitudinal edges of the blade, the chord 9, and a line 10 extending at right angles to the axis of rotation of the propeller.

It will be seen that a propeller blade having the same constant pitch as the twisted conventional blade shown to the left of Figure 3 and the same angles of attack $\alpha_A$—$\alpha_D$ can only be obtained from the straight, non-twisted profile blank according to the invention, by removing material from the thin profile part 2 of uniform thickness.

It should be emphasized here that the profile of the illustrated part 1 can be modified in many different ways, and the surface 4, for example, may be completely flat if desired, or may, for example, have the same radius as the curved surface 3. The convex, single-curve surface 3 need not by symmetrical as described, but may, for example, have a wing profile form of the kind illustrated in section D to the left of Figure 3.

A propeller can be produced very quickly, even by unskilled workmen, since all that is required is access to the relatively inexpensive blade blank and data concerning the width of the blade at some sections. If a blade should become damaged, all that is necessary is to take the width measurements of the undamaged blade and mark these measurements on a blade blank, and then saw and grind part 8 (Figure 2) away.

Figure 4 illustrates part of a propeller having two blades 11 and 12 and manufactured from a blank according to Figures 1 and 2. The two blades 11 and 12 are twistably mounted on a hub 13. As will be seen from Figure 5, the hub comprises a cylindrical body 14 having a central bore 15 for receiving the engine shaft. Provided in the cylindrical body 14 are two cylindrical recesses 16 arranged to rotatably receive a cylindrical part 17 of a head 18. The head 18 forms part of a bifurcate element having two legs 19 and 20 which form therebetween a gap 21 into which one end of respective propeller blades 11, 12 can be inserted and fastened by means of bolts 22, 23 (Figure 4). The head 18 has an outer part in the form of a straight truncated cone which is co-axial with the cylindrical part 17 and which co-acts with a conical surface located on the inner surface of a cover plate 24. The cover 24 is secured to the cylindrical body 14 by means of bolts 25 and is through-passed by respective bifurcate elements. By loosening the bolts 25, a bifurcate element together with its associated propeller blade 11, 12 can be rotated continuously and smoothly to adjust the pitch for optimal use of the engine. Subsequent to setting the desired pitch, the head 18 of respective bifurcate elements is secured by tightening the bolts 25, the conical surface on said head 18 being urged against the conical surface 26 on respective covers 24, so as to positively lock the head 18 in the set position.

Figure 6 is a simplified view of a hub 26 of the same kind as that illustrated in Figure 5, but intended for a three-bladed propeller. The hub 26 has a central bore for receiving the engine shaft,' and sunk into the hub are three pressure plates or cover plates 28 corresponding to the cover plates 24 of the Figure 5 embodiment. Propeller blade attachment means 29 may also have the form of the bifurcate elements 19, 20 shown in Figure 5, or any other suitable form.

Each attachment means 29 has an inner head with a conical surface arranged to co-act with a conical surface in respective covers 28, as described with reference to Figure 5.

## Claims

1. A propeller blade, which comprises a first elongated, straight part (1) which is streamlined in cross section and is of constant cross sectional area and shape from one end of the part to the opposite end thereof; and a second planar part (2) integral with said first part (1) said second part (2) merging with one longitudinal edge of said first part and extending along the entire length of said edge, said second part having substantially constant thickness but less than that of said first part, a first surface (5) of said second part merging at least substantially tangentially with a convex single curved surface (3) of said first part and a second surface (6) of said second part which merges smoothly with the other surface (4) of said first part (1), the second part converging towards the tip of the propeller blade.

2. A blade according to Claim 1, characterized in that the convex, single curved surface (3) of the first profile part (1) is defined at right angles to the longitudinal direction of the blank by a circular arc.

3. A blade according to Claim 1, characterized in that said other surface (4) of said first profile part (1) is defined at right angles to said blank by a circular arc.

4. A blade according to Claim 1, characterized in that said other surface (4) of said first profile part (1) is planar.

## Patentansprüche

1. Schraubenflügel mit einem langgestreckten, geraden ersten Teil (1), der im Querschnitt stromlinienförmig ist und vom einen Ende dieses Teils zu dessen entgegen-gesetztem Ende eine gleichbleibende Quer-schnittsform und Querschnittsfläche besitzt, und

einem ebenen zweiten Teil (2), der mit dem ersten Teil (1) einstückig ist und in ihn an einem Längsrand desselben übergeht und sich über die ganze Länge dieses Randes erstreckt und der eine im wesentlichen gleichbleibende Dicke hat, die kleiner ist als die des ersten Teils,

wobei eine erste Fläche (5) des zweiten Teils im wesentlichen tangential in eine einfachgekrümmte konvexe Fläche (3) des ersten Teils übergeht, eine zweite Fläche (6) des zweiten Teils glatt in die andere Fläche (4) des ersten Teils (1) übergeht und der zweite Teil zu der Spitze des Schraubenflügels hin verjüngt ist.

2. Flügel nach Anspruch 1, dadurch gekennzeichnet, daß die enfachgekrümmte Fläche (3) des ersten Profilteiles (1) rechtwinklig zu der Längsrichtung des Vorformlings durch einem Kreisbogen begrenzt ist.

3. Flügel nach Anspruch 1, dadurch gekennzeichnet daß die andere Fläche (4) des ersten Profilteils (1) rechtwinklig zu dem Vorformling durch einen Kreisbogen begrenzt ist.

4. Flügel nach Anspruch 1, dadurch gekennzeichnet, daß die andere Fläche (4) des ersten Profilteils (1) eben ist.

**Revendications**

1. Pale d'hélice comportant une partie droite allongée (1) de coupe aérodynamique et d'aire de travers extérieur et de forme constantes d'une extrémité de ladite partie à l'autre; et

une seconde partie planaire (2) solidaire de ladite partie (1), ladite seconde partie (2) se confondant avec le bord longitudinal de ladite partie et s'étendant sur la longueur totale dudit bord, ladite seconde partie ayant une épaisseur pratiquement constante mais inférieure à celle de ladite première partie,

une première surface (5) de ladite second partie se confondant presque tangentiellement avec une surface convexe développable (3) de ladite première partie et une second surface (6) de ladite second partie qui se confond régulièrement avec l'autre surface (4) de ladite première partie, la second partie convergeant vers l'extrémité de la pale d'hélice.

2. Pale selon la revendication 1, caractérisée en ce que la surface convexe développable (3) de la première partie du profil (1) est définie perpendiculairement à la direction longitudinale de l'ébauche par un arc circulaire.

3. Pale selon la revendication 1, caractérisée en ce que ladite autre surface (4) de ladite première partie du profil (1) est définie perpendiculairement à ladite ébauche par un arc circulaire.

4. Pale selon la revendication 1, caractérisé en ce que ladite autre surface (4) de ladite première partie du profil (1) est planaire.

*Fig_1*

*Fig_2*

Fig.3

_Fig_4_

11

13

12

22

23    25

24    15    24    20

_Fig_5_

24    17    14

20    21    18

16

19    26    15

_Fig_6_

28    29

28    26

27

28    28

29    29